# FASCICULE DE BREVET EUROPEEN

(11) **EP 3 356 620 B1**
(45) Date de publication et mention de la délivrance du brevet: **26.06.2019**
(21) Numéro de dépôt: 16785233.4
(22) Date de dépôt: 28.09.2016
(51) Int. Cl.: E04H 4/16, H04N 5/225, H04N 5/247, G05D 1/02

(54) **SYSTÈME DE NETTOYAGE DE PISCINE À DISPOSITIF DE PRISE D'IMAGES**
SCHWIMMBECKENREINIGUNGSSYSTEM MIT BILDERFASSUNGSVORRICHTUNG
SWIMMING POOL CLEANING SYSTEM WITH IMAGE CAPTURE DEVICE

(30) Priorité: 01.10.2015 FR 1559339
(43) Date de publication de la demande: 08.08.2018
(73) Titulaire: Zodiac Pool Care Europe, 69500 Bron (FR)
(72) Inventeur: PICHON, Philippe, 31800 Villeneuve De Rivière (FR)
(74) Mandataire: Ipside
(86) Numéro de dépôt international: PCT/FR2016/052456
(87) Numéro de publication internationale: WO 2017/055737

(56) Documents cités:
- EP-A2- 2 607 573
- US-A- 5 205 174
- US-A- 5 561 883
- US-A1- 2014 015 959

## Description

La présente invention relève du domaine des équipements pour piscines. Elle concerne plus particulièrement un système autonome de nettoyage de piscine de type robot associé à des moyens d'alimentation et de commande.

### Préambule et art antérieur

L'invention concerne un appareil nettoyeur de surface immergée dans un liquide, telle qu'une surface formée par les parois d'un bassin, notamment d'une piscine. Il s'agit notamment d'un robot mobile de nettoyage de piscine. Un tel robot de nettoyage réalise ledit nettoyage en parcourant le fond et les parois du bassin de la piscine, en brossant ces parois, et en aspirant les débris vers un filtre. On désigne par débris toutes les particules présentes au sein du bassin, telles que morceaux de feuilles, microalgues, etc., ces débris étant normalement déposés au fond du bassin ou collés sur les parois latérales de celui-ci.

Le plus couramment, le robot est alimenté en énergie par un câble électrique reliant le robot à une unité extérieure de commande et d'alimentation.

On connaît, par exemple, dans ce domaine, le brevet FR 2 929 311, de la demanderesse, qui vise un appareil nettoyeur de surface immergée à régulation de pression de pompe. De tels dispositifs comprennent un corps, des organes d'entraînement dudit corps sur la surface immergée, une chambre de filtration ménagée au sein du corps et comportant une entrée de liquide, une sortie de liquide, un circuit hydraulique de circulation de liquide entre l'entrée et la sortie à travers un dispositif de filtrage. Dans ce brevet, le dispositif de filtrage est amovible pour permettre de vider les feuilles et autres débris sans devoir retourner l'appareil de nettoyage.

On connaît, également dans le même domaine, la demande de brevet EP 2 607 573, qui vise un appareil nettoyeur de piscine à régulation de débit de pompe, comprenant un capteur configuré pour détecter des objets étrangers dans la piscine, la pompe étant activée à différents niveaux de puissance suivant la présence ou l'absence d'une détection par le capteur d'un objet étranger dans la piscine.

Un autre exemple dans ce domaine est la demande de brevet US 2014/015959 A1, qui vise un système de nettoyage de piscine utilisant un appareil nettoyeur de surface immergée et des caméras, situées hors du bassin et configurées pour capturer des images de la piscine et de l'appareil nettoyeur de surface immergée.

Enfin, on connait aussi le brevet US 5 561 883, qui vise un appareil nettoyeur de conteneurs utilisés pour le stockage dans les usines pétrochimiques ou les raffineries. Un tel appareil comprend notamment une caméra embarquée et une source de lumière embarquée permettant à un utilisateur de l'appareil de contrôler les déplacements de l'appareil à distance.

Un des problèmes de tous ces robots est la difficulté à piloter leurs évolutions d'une manière qui maximise la zone nettoyée en fonction du temps.

L'invention a pour but de remédier notamment à cet inconvénient.

### Exposé de l'invention

L'invention vise sous un premier aspect un système de nettoyage de piscine comprenant un appareil de nettoyage destiné à être immergé dans la piscine.

Le système comporte également un moyen d'acquisition d'images solidarisé à un flotteur par l'intermédiaire d'un lien souple attaché à l'appareil de nettoyage immergé. Le moyen d'acquisition d'images comprend avantageusement au moins une caméra vidéo. Il peut comprendre deux caméras orientées dans des directions différentes.

Dans un mode de réalisation alternatif, le moyen d'acquisition d'image comprend un moyen de mesurer la luminance locale dans une zone de visée, et par exemple autour de l'appareil de nettoyage. Ceci correspond à une acquisition d'image très « dégradée » par rapport à une image de caméra vidéo, mais cependant suffisante pour une détection de zones plus ou moins sombres au fond du bassin à nettoyer.

On appelle "appareil de nettoyage de piscine" un appareil pour le nettoyage d'une surface immergée, c'est-à-dire typiquement un appareil, mobile au sein ou au fond d'un bassin de piscine, et adapté à effectuer la filtration de débris déposés tant que le fond que sur une paroi. Un tel appareil est communément connu sous le nom de robot de nettoyage de piscine, lorsqu'il comporte des moyens de gestion automatisée des déplacements au fond et sur les parois de la piscine pour couvrir toute la surface à nettoyer.

On nomme ici par abus de langage "liquide" le mélange d'eau et de débris en suspension dans la piscine ou dans le circuit de circulation de fluide au sein de l'appareil de nettoyage.

Dans un mode de réalisation particulier, le système de nettoyage de piscine comporte des moyens de transfert des images acquises par le moyen d'acquisition d'images à un dispositif de pilotage de l'appareil de nettoyage.

Il comporte avantageusement des moyens de modifier la trajectoire de l'appareil de nettoyage en fonction des images acquises.

Dans des modes de réalisation particuliers, au moins une partie du flotteur est située à la surface de l'eau de la piscine.

L'invention vise également un procédé de pilotage d'un appareil de nettoyage de piscine pour système de nettoyage tel qu'exposé, le procédé comportant une étape dans laquelle on détecte une zone encore non nettoyée sur le fond du bassin, et une étape de modification de trajectoire de l'appareil de nettoyage pour parcourir et nettoyer cette zone.

L'invention vise également un procédé de pilotage d'un appareil de nettoyage de piscine pour système de nettoyage tel qu'exposé, le procédé comportant une étape dans laquelle on détecte la géométrie du bassin autour de l'appareil, et une étape de modification de trajectoire en réponse à la géométrie observée (pente, mur ou obstacle particulier).

L'invention concerne également un système de nettoyage de surface immergée caractérisé en combinaison par tout ou partie des caractéristiques mentionnées ci-dessus ou ci-après.

### Présentation des figures

Les caractéristiques et avantages de l'invention seront mieux appréciés grâce à la description qui suit, description qui expose les caractéristiques de l'invention au travers d'un exemple non limitatif d'application.

La description s'appuie sur les figures annexées dans lesquelles :
La figure 1 illustre une vue en perspective d'un appareil de nettoyage de piscine mettant en oeuvre un système de filtration tel qu'exposé,
La figure 2 illustre une vue en coupe du même appareil selon un plan vertical longitudinal,
La figure 3 illustre une vue des éléments principaux du système de nettoyage de piscine, incluant l'appareil de nettoyage et une caméra montée sur flotteur, selon quatre modes de réalisation différents (A, B, C, D).

### Description détaillée d'un mode de réalisation de l'invention

L'invention trouve sa place au sein d'un environnement technique de piscine, par exemple une piscine enterrée de type familial.

Un système de nettoyage de surface immergée comporte, dans le présent exemple de réalisation, un appareil de nettoyage **10**, appelée plus loin robot de nettoyage de piscine, et une unité d'alimentation et de commande dudit robot de nettoyage de piscine (non illustrée sur les figures). Dans une variante, cette unité d'alimentation et de commande peut être intégrée à l'appareil de nettoyage. Dans une autre variante, cette unité d'alimentation et de commande peut être intégrée dans le flotteur portant un moyen d'acquisition d'images.

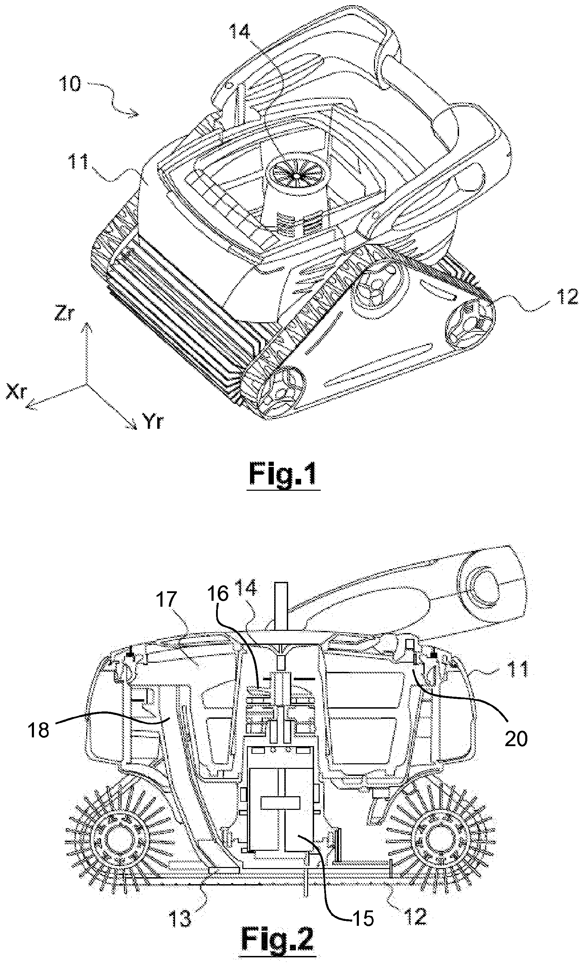

L'appareil de nettoyage 10 est représenté selon un mode de réalisation donné ici à titre d'exemple, en figures 1 et 2. Sur ces figures, le type d'appareil est ici à éjection d'eau inclinée vers l'arrière de l'appareil, relativement au plan de roulement du robot.

L'appareil de nettoyage de piscine 10 comprend un corps **11** et des organes d'entraînement et de guidage **12** du corps 11 sur une surface immergée. Dans le présent exemple, ces organes d'entrainement et de guidage 12 sont constitués de roues disposées de façon latérale au corps (voir figure 1).

Les organes d'entraînement et du guidage définissent un plan de guidage sur une surface immergée par leurs points de contact avec ladite surface immergée. Ledit plan de guidage est généralement sensiblement tangent à la surface immergée au point auquel se trouve l'appareil. Ledit plan de guidage est par exemple sensiblement horizontal lorsque l'appareil de nettoyage 10 se déplace sur une surface immergée de fond de piscine.

Dans tout le texte les notions « haut » et « bas » sont définies le long d'une droite, perpendiculaire audit plan de guidage, un élément « bas » étant plus proche du plan de guidage qu'un élément haut.

L'appareil de nettoyage de piscine 10 comprend en outre un moteur entraînant lesdits organes d'entraînement et de guidage, ledit moteur étant, dans le présent exemple, alimenté en énergie par l'unité de commande et de contrôle via un câble souple étanche. Dans d'autres modes de réalisation, l'appareil de nettoyage est autonome en énergie.

L'appareil de nettoyage de piscine 10 présente au moins une entrée de liquide **13** et une sortie de liquide **14**. L'entrée de liquide 13 est située à la base du corps (en d'autres termes sous celui-ci), c'est-à-dire immédiatement en regard d'une surface immergée sur laquelle se déplace l'appareil 10 afin de pouvoir aspirer les débris accumulés sur ladite surface immergée.

La sortie de liquide 14 se situe ici sur le capot, à l'arrière de l'appareil de nettoyage 10. Dans le présent exemple, la sortie de liquide se fait dans une direction orientée vers l'arrière de l'appareil de nettoyage 10. Cette disposition n'est cependant pas limitative, et une sortie d'eau sensiblement perpendiculaire au plan de guidage, c'est-à-dire verticalement si l'appareil de nettoyage 10 repose sur le fond de la piscine, est également envisageable.

L'appareil de nettoyage 10 comprend un circuit hydraulique reliant l'entrée de liquide 13 à la sortie de liquide 14. Le circuit hydraulique est adapté pour pouvoir assurer une circulation de liquide depuis l'entrée de liquide 13 vers la sortie de liquide 14. L'appareil de nettoyage 10 comprend à cet effet une pompe de circulation comprenant un moteur électrique **15** et une hélice **16** (voir figure 2), ledit moteur électrique 15 entraînant l'hélice 16 en rotation, ladite hélice 16 étant disposée dans le circuit hydraulique.

L'appareil de nettoyage 10 comprend une chambre de filtration **17** interposée, sur le circuit hydraulique, entre l'entrée de liquide 13 et la sortie de liquide 14. La chambre de filtration est en particulier alimentée en liquide via au moins un canal amont **18** reliant l'entrée de liquide 13 à la chambre de filtration 17.

La chambre de filtration 17 comprend un panier de filtration **20**. Ce panier de filtration 20 est avantageusement mais non nécessairement amovible.

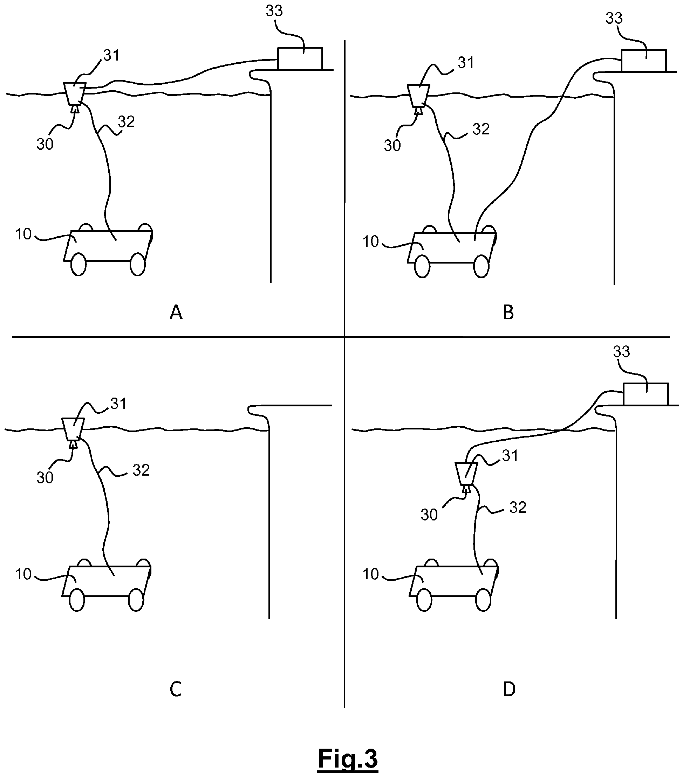

Dans le mode de réalisation décrit ici à titre d'exemple, l'appareil de nettoyage 10 (en d'autres termes le robot de piscine) est équipé d'une caméra **30** (voir figure 3). Dans le présent exemple de réalisation, la caméra 30 est montée sur un flotteur **31**, lequel est tracté par l'appareil de nettoyage 10 via un câble **32**. Ce câble 32 peut être confondu avec un câble d'alimentation et de contrôle reliant l'appareil de nettoyage 10 et une unité **33** d'alimentation et de commande dudit appareil de nettoyage 10, notamment lorsque celle-ci est constituée d'un système placé à l'extérieur et au voisinage de la piscine.

Cette caméra 30 est ici de type caméra vidéo, par exemple semblable aux webcams équipant des ordinateurs personnels. La caméra 30 est donc avantageusement de faibles dimensions (moins de quelques dizaines de centimètres cubes) et de faible masse (moins de quelques dizaines de grammes). La caméra 30 peut cependant présenter des dimensions plus importantes, selon le cahier des charges de ladite caméra. Il peut également s'agir d'un groupe de deux ou plusieurs caméras (non illustré sur les figures) pointant par exemple dans des directions différentes. Cependant dans la mise en oeuvre décrite ici, une seule caméra est utilisée car, en étant située au-dessus de l'appareil de nettoyage 10, elle peut détecter seule le niveau de salissure et la géométrie de la piscine autour de l'appareil de nettoyage 10.

La caméra 30 est ici alimentée en énergie par le câble 32 qui la lie à l'appareil de nettoyage 10. Elle peut alternativement être autonome en énergie, par exemple si elle comporte une batterie d'alimentation (non illustrée sur les figures) d'une autonomie adaptée à son cahier des charges. Elle peut encore être alimentée par un petit panneau photovoltaïque attaché à la partie supérieure du flotteur 31.

Les figures 3 A, B, C et D illustrent respectivement quatre modes de réalisation différents de la présente invention. La figure 3A illustre un mode de réalisation dans lequel l'alimentation électrique de l'appareil de nettoyage 10 est faite au travers du flotteur 31 ce qui permet l'alimentation de la caméra 30 et l'envoi direct d'images vers l'unité 33 d'alimentation afin que celle-ci puisse les transférer à des équipements via internet.

La figure 3B illustre un mode de réalisation dans lequel l'alimentation de l'appareil de nettoyage est réalisée par une unité 33 d'alimentation séparée de la liaison avec le flotteur 31. Cette configuration peut être envisagée en rétrofit par exemple.

La figure 3C illustre un mode de réalisation dans lequel le flotteur 31 intègre une batterie et/ou un panneau solaire (non représenté sur la figure) servant à alimenter la caméra 30 et l'appareil de nettoyage 10.

La figure 3D illustre un mode de réalisation identique à celui illustré en figure 3A, dans lequel le flotteur 31 ne se trouve pas en surface mais à une distance fixe de l'appareil de nettoyage 10.

Dans les variantes envisagées ici à titre d'exemple nullement limitatif, l'unité d'alimentation 33 alimente l'appareil de nettoyage 10. L'unité 33 commande uniquement le démarrage du cycle de nettoyage et l'IHM utilisateur. La commande de l'appareil de nettoyage 10, qui pilote les moteurs de pompe et de traction en fonction de l'algorithme de déplacement et des informations données par des capteurs embarqués comme le gyroscope ou l'accéléromètre, est située dans l'appareil de nettoyage 10.

L'idée est d'avoir un traitement d'image proche de la caméra (dans le flotteur), les informations « simples » issues du traitement d'image seront ensuite utilisées par le circuit de commande intégré dans le robot pour adapter son déplacement.

La caméra 30 est ici pointée vers l'appareil de nettoyage 10. Elle est, pour ce faire, orientée selon un angle prédéterminé, éventuellement réglable, par rapport à la direction de flottaison normal du flotteur 31. De la sorte, le champ de vision de la caméra 30 comporte à la fois l'appareil de nettoyage 10 mais aussi son voisinage, et notamment les parois verticales du bassin lorsque l'appareil s'en approche. Dans le présent exemple de mise en oeuvre, la liaison souple entre l'appareil de nettoyage 10 et le flotteur rend toute orientation déterminée de l'un par rapport à l'autre difficile. Le système comporte de ce fait ici des moyens de reconnaître, quelle que soit l'orientation du flotteur, l'orientation et le sens de déplacement de l'appareil de nettoyage 10, à l'aide de marqueurs placés sur le corps de ce dernier. Dans un exemple de réalisation, le système comporte des moyens de détecter, sur les images fournies par la caméra 30, l'orientation et le sens de déplacement de l'appareil de nettoyage 10.

De même, la caméra est à même d'observer les différences de luminance dans son champ de vision, et donc notamment de percevoir les zones les plus sales du fond du bassin.

La caméra 30 transfère ses images à l'unité 33 d'alimentation et de contrôle, ou à tout autre dispositif de pilotage de l'appareil de nettoyage. Elle peut, par exemple, transmettre ses images vers un téléphone mobile de type Smartphone doté de moyens de pilotage à distance de l'appareil de nettoyage 10.

Dans le présent exemple de réalisation, l'unité 33 de commande comprend des moyens de modifier la trajectoire de l'appareil de nettoyage 10 en fonction des images reçues de la caméra 30.

### Mode de fonctionnement

Dans le présent exemple de mise en oeuvre, lors de la mise en fonctionnement du robot, la caméra vidéo 30 est mise en marche, et les données vidéo sont transmises à l'unité d'alimentation et de contrôle.

La caméra 30 permet alors d'optimiser le déplacement de l'appareil de nettoyage 10 pour limiter sa durée de fonctionnement.

Le procédé de pilotage peut notamment comprendre une étape dans laquelle on détecte une zone encore non nettoyée sur le fond du bassin, par exemple par la détection d'une couleur localement plus foncée du fond. Dans une étape suivante, l'appareil de nettoyage 10 est piloté vers cette zone sale.

Le procédé de pilotage peut également comprendre une étape dans laquelle on détermine la géométrie de la surface du bassin située autour de l'appareil de nettoyage 10 (pente, paroi, obstacle ponctuel....). Dans une étape suivante, l'appareil de nettoyage 10 adapte son déplacement en fonction de la géométrie de la surface du bassin à proximité du robot.

### Avantages

La camera 30 est ici indépendante du corps 11 de l'appareil de nettoyage 10 (en ce sens qu'elle n'est pas fixée sur le corps du robot), auquel elle n'est solidarisée que par un câble 32. Elle n'est également pas fixe par rapport au bassin, ce qui lui permet de suivre les évolutions de l'appareil de nettoyage 10 quelle que soit la position et l'attitude de celui-ci vis à vis du bassin.

Les avantages sont:
- vision complète de l'environnement autour de l'appareil de nettoyage 10 (mur, pentes, débris) et non pas seulement sur l'avant de l'appareil,
- meilleure description de l'environnement / meilleure précision d'image car l'angle de vue est plus direct (le fond de la piscine est face à la caméra 30).
- pas de nécessité de créer un volume étanche sur l'appareil de nettoyage 10 qui affecte l'équilibre de l'appareil (coût réduit de fabrication) et possibilité d'équiper a posteriori un robot préexistant.
- le flotteur 31 peut également intégrer une batterie ou un panneau solaire.

La caméra 30 permet d'optimiser le déplacement de l'appareil de nettoyage 10 pour couvrir la zone a nettoyer le plus efficacement possible, et ainsi limiter la durée de fonctionnement de l'appareil de nettoyage 10, ce qui réduit son usure et maximise sa durée de vie. Par ailleurs, la durée de présence de l'appareil de nettoyage 10 dans le bassin se trouve réduite, ce qui augmente la durée de disponibilité de celui-ci pour les nageurs.

## Revendications

1. Système de nettoyage de piscine comprenant un appareil de nettoyage (10) destiné à être immergé dans la piscine,
**caractérisé en ce que** le système comporte également un moyen d'acquisition d'images (30) solidarisé à un flotteur (31) par l'intermédiaire d'un lien souple (32) attaché à l'appareil de nettoyage (10) immergé.

2. Système de nettoyage de piscine selon la revendication 1, **caractérisé en ce que** le moyen d'acquisition d'images (30) comprend au moins une caméra vidéo.

3. Système de nettoyage de piscine selon l'une quelconque des revendications 1 à 2, **caractérisé en ce que** le moyen d'acquisition d'images (30) comprend deux caméras vidéo orientées dans des directions différentes.

4. Système de nettoyage de piscine selon l'une quelconque des revendications 1 à 3, **caractérisé en ce que** le lien souple (32) est confondu avec un câble d'alimentation et de contrôle reliant l'appareil de nettoyage (10) et une unité (33) d'alimentation et de commande dudit appareil de nettoyage (10).

5. Système de nettoyage de piscine selon l'une quelconque des revendications 2 à 4, **caractérisé en ce que** la caméra (30) est alimentée en énergie par le câble (32) qui la lie à l'appareil de nettoyage (10).

6. Système de nettoyage de piscine selon l'une quelconque des revendications 2 à 5, **caractérisé en ce qu'**il comporte des moyens de détecter, sur les images fournies par la caméra (30), l'orientation et le sens de déplacement de l'appareil de nettoyage (10).

7. Système de nettoyage de piscine selon l'une quelconque des revendications 2 à 6, **caractérisé en ce que** le moyen d'acquisition d'image (30) comprend un moyen de mesurer la luminance locale dans une zone de visée.

8. Système de nettoyage de piscine selon l'une quelconque des revendications 2 à 7, **caractérisé en ce qu'**il comporte des moyens de transfert des images acquises par le moyen d'acquisition d'images (30) à un dispositif de pilotage de l'appareil de nettoyage (10).

9. Système de nettoyage de piscine selon l'une quelconque des revendications 2 à 8, **caractérisé en ce qu'**il comporte des moyens de modifier la trajectoire de l'appareil de nettoyage (10) en fonction des images acquises.

10. Système de nettoyage de piscine selon l'une quelconque des revendications 1 à 9, dans lequel au moins une partie du flotteur est située à la surface de l'eau de la piscine.

11. Procédé de pilotage d'un système de nettoyage de piscine, ledit système étant conforme à une quelconque des revendications 1 à 10, **caractérisé en ce que** le procédé comporte une étape dans laquelle on détecte une zone encore non nettoyée sur le fond du bassin, et une étape de modification de trajectoire de l'appareil de nettoyage (10) pour parcourir et nettoyer cette zone.

12. Procédé selon la revendication 11, **caractérisé en ce que** la détection d'une zone encore non nettoyée sur le fond du bassin est réalisée par la détection d'une couleur localement plus foncée du fond sur les images fournies par le moyen d'acquisition d'images (30).

13. Procédé de pilotage d'un système de nettoyage de piscine, ledit système étant conforme à une quelconque des revendications 1 à 10, **caractérisé en ce que** le procédé comporte une étape dans laquelle on détermine la géométrie de la surface de la piscine à proximité de l'appareil de nettoyage (10), et une étape d'adaptation de trajectoire dudit appareil de nettoyage (10) en réponse à la géométrie de la surface de la piscine à proximité de l'appareil de nettoyage (10).

## Patentansprüche

1. Schwimmbeckenreinigungssystem, ein Reinigungsgerät (10) umfassend, das dazu bestimmt ist, in das Schwimmbecken eingetaucht zu werden,
**dadurch gekennzeichnet, dass** das System auch ein Bilderfassungsmittel (30) beinhaltet, das über eine elastische Verbindung (32), die an dem eingetauchten Reinigungsgerät (10) angebracht ist, fest mit einem Schwimmer (31) verbunden ist.

2. Schwimmbeckenreinigungssystem nach Anspruch 1, **dadurch gekennzeichnet, dass** das Bilderfassungsmittel (30) mindestens eine Videokamera umfasst.

3. Schwimmbeckenreinigungssystem nach einem der Ansprüche 1 bis 2, **dadurch gekennzeichnet, dass** das Bilderfassungsmittel (30) zwei Videokameras umfasst, die in unterschiedliche Richtungen orientiert sind.

4. Schwimmbeckenreinigungssystem nach einem der Ansprüche 1 bis 3, **dadurch gekennzeichnet, dass** die elastische Verbindung (32) mit einem Versorgungs- und Kontrollkabel zusammengenommen ist, das das Reinigungsgerät (10) und eine Einheit (33) zum Versorgen und Steuern des Reinigungsgeräts (10) verbindet.

5. Schwimmbeckenreinigungssystem nach einem der Ansprüche 2 bis 4, **dadurch gekennzeichnet, dass** die Kamera (30) durch das Kabel (32) mit Energie versorgt wird, das sie mit dem Reinigungsgerät (10) verbindet.

6. Schwimmbeckenreinigungssystem nach einem der Ansprüche 2 bis 5, **dadurch gekennzeichnet, dass** es Mittel zum Detektieren, auf den von der Kamera (30) bereitgestellten Bildern, der Orientierung und der Fortbewegungsrichtung des Reinigungsgeräts (10) beinhaltet.

7. Schwimmbeckenreinigungssystem nach einem der Ansprüche 2 bis 6, **dadurch gekennzeichnet, dass** das Bilderfassungsmittel (30) ein Mittel zum Messen der lokalen Leuchtdichte in einer Visierzone umfasst.

8. Schwimmbeckenreinigungssystem nach einem der Ansprüche 2 bis 7, **dadurch gekennzeichnet, dass** es Mittel zum Übertragen der durch das Bilderfassungsmittel (30) erfassten Bilder an eine Lenkungsvorrichtung des Reinigungsgeräts (10) beinhaltet.

9. Schwimmbeckenreinigungssystem nach einem der Ansprüche 2 bis 8, **dadurch gekennzeichnet, dass** es Mittel zum Ändern des Bahnverlaufs des Reinigungsgeräts (10) je nach den erfassten Bildern beinhaltet.

10. Schwimmbeckenreinigungssystem nach einem der Ansprüche 1 bis 9, wobei sich mindestens ein Teil des Schwimmers an der Oberfläche des Wassers des Schwimmbeckens befindet.

11. Verfahren zum Lenken eines Schwimmbeckenreinigungssystems, wobei das System einem der Ansprüche 1 bis 10 entspricht, **dadurch gekennzeichnet, dass** das Verfahren einen Schritt beinhaltet, bei dem man eine noch nicht gereinigte Zone am Boden des Beckens detektiert, und einen Schritt zum Ändern des Bahnverlaufs des Reinigungsgeräts (10) zum Durchlaufen und Reinigen dieser Zone.

12. Verfahren nach Anspruch 11, **dadurch gekennzeichnet, dass** die Detektion einer noch nicht gereinigten Zone am Boden des Beckens durch die Detektion einer lokal dunkleren Farbe des Bodens auf den durch das Bilderfassungsmittel (30) bereitgestellten Bildern realisiert wird.

13. Verfahren zum Lenken eines Schwimmbeckenreinigungssystems, wobei das System einem der Ansprüche 1 bis 10 entspricht, **dadurch gekennzeichnet, dass** das Verfahren einen Schritt beinhaltet, bei dem man die Geometrie der Oberfläche des Schwimmbeckens in der Nähe des Reinigungsgeräts (10) bestimmt, und einen Schritt zum Anpassen des Bahnverlaufs des Reinigungsgeräts (10) als Reaktion auf die Geometrie der Oberfläche des Schwimmbeckens in der Nähe des Reinigungsgeräts (10).

## Claims

1. Swimming pool cleaning system including a cleaning device (10) intended to be submerged in the swimming pool,
**characterized in that** the system includes as well an images acquisition means (30) secured to a float (31) via a flexible tie (32) attached to the submerged cleaning device (10).

2. Swimming pool cleaning system according to claim 1, **characterized in that** the images acquisition means (30) include at least one video camera.

3. Swimming pool cleaning system according to any one of claims 1 to 2, **characterized in that** the images acquisition means (30) includes two video cameras oriented in different directions.

4. Swimming pool cleaning system according to any one of claims 1 to 3, **characterized in that** the flexible tie (32) coincides with a power supply and control cable connecting the cleaning device (10) and a power supply and control unit (33) of said cleaning device (10).

5. Swimming pool cleaning system according to any one of claims 2 to 4, **characterized in that** the camera (30) is powered by the cable (32) that connects it to the cleaning device (10).

6. Swimming pool cleaning system according to any one of claims 2 to 5, **characterized in that** it includes means for detecting, on the images supplied by the camera (30), the orientation and the movement direction of the cleaning device (10).

7. Swimming pool cleaning system according to any one of claims 2 to 6, **characterized in that** the image acquisition means (30) includes means for measuring local luminance in a targeted area.

8. Swimming pool cleaning system according to any one of claims 2 a 7, **characterized in that** it includes means for transferring the images acquired by the image acquisition means (30) to an apparatus for controlling the cleaning device (10).

9. Swimming pool cleaning system according to any one of claims 2 to 8, **characterized in that** it includes means for modifying the trajectory of the cleaning device (10) depending on the images acquired.

10. Swimming pool cleaning system according to any one of claims 1 to 9, wherein at least one part of the float is located on the surface of the swimming pool water.

11. Method for controlling a swimming pool cleaning system, said system being compliant to any one of claims 1 to 10, **characterized in that** the method includes a step wherein an area still not cleaned on the bottom of the basin is detected, and a step of modifying the trajectory of the cleaning device (10) for covering and cleaning that area.

12. Method according to claim 11, **characterized in that** the detection of an area still not cleaned on the bottom of the basin is performed by detecting a locally darker color of the bottom on the images supplied by the images acquisition means (30).

13. Method for controlling a swimming pool cleaning system, said system being compliant to any one of claims 1 to 10, **characterized in that** the method includes a step wherein the swimming pool surface geometry situated around the cleaning device (10) is determined, and a step of adaptation of the trajectory of said cleaning device (10) in response to the swimming pool surface geometry in the vicinity of the cleaning device (10).
